# EUROPEAN PATENT APPLICATION

(11) **EP 1 371 683 A1**
(43) Date of publication of application: **17.12.2003**
(21) Application number: 03006912.4
(22) Date of filing: 26.03.2003
(51) Int. Cl.: C08K 9/08, C08K 7/00, C08G 18/00, C08G 18/10

(54) **Aqueous binders containing layered silicate, process for the production thereof and use thereof in aqueous coating compositions**

(30) Priority: 12.06.2002 US 167527
(71) Applicant: E.I.Du Pont de Nemours and Company, Wilmington, Deleware 19898 (US)
(72) Inventor: Goebel, Armin, Wetter, 58300 (DE); Bosch, Werner, Wuppertal, 42399 (DE); Doebert, Juergen, Sprockhoevel, 45549 (DE); Brunner, Marcus, Wuppertal, 42111 (DE); Taschner, Marco, 42285 Wuppertal (DE); Vogt-Birnbrich, Bettina, 42719 Solingen (DE)
(74) Representative: DuPont Performance Coatings Christine Biering/Christine Kimpel

(57) **Abstract**

Aqueous binders containing 0.2 to 7 wt-% of layered silicate, relative to binder solids content, obtainable by converting a homogeneous mixture of layered silicate and non-aqueous binder (precursor) into the aqueous phase by mixing with water and, in the case of a binder precursor, concluding synthesis of the binder in the aqueous phase.

## Description

### Field of the Invention

The invention relates to aqueous binders containing layered silicate and to a process for the production thereof. It also relates to a process for the production of aqueous coating compositions using the aqueous binders containing layered silicate.

### Background of the Invention

Incorporating layered silicate into aqueous coating compositions is extremely difficult. Layered silicate has accordingly hitherto been incorporated into aqueous coating compositions by using semi-finished preparations containing layered silicate. WO 99/29786 and US 5,198,490, for example, disclose preparations containing layered silicate, which may be used for the production of water-borne base coats.

The prior art is disadvantageous not only in that the layered silicate is incorporated into the aqueous coating composition in the form of a layered silicate preparation which must be produced beforehand, but also in that freedom in formulating the aqueous coating compositions is restricted in that auxiliary substances, which may even be undesirable, inevitably make their way into the aqueous coating compositions from the layered silicate preparation.

### Summary of the Invention

The stated disadvantages may be overcome by the provision of aqueous binders containing layered silicate which are obtainable by converting a homogeneous mixture of layered silicate and non-aqueous binder (precursor) into the aqueous phase by mixing with water and, in the case of a binder precursor, concluding synthesis of the binder in the aqueous phase.

In this description and the claims, the term "binder (precursor)" is used as shorthand for "binder or binder precursor".

The present invention provides aqueous binders suitable for the production of aqueous coating compositions, wherein the aqueous binder contains 0.2 to 7 wt-%, preferably 0.5 to 5 wt-% of layered silicate, relative to binder solids content, which binders are obtainable by converting (a) a homogeneous mixture of layered silicate and non-aqueous finished binder or (b) a homogeneous mixture of layered silicate and non-aqueous binder precursor into the aqueous phase by mixing with water and, in case (b), concluding synthesis of the binder in the aqueous phase.

### Detailed Description of the Embodiments

The aqueous binders containing layered silicate comprise aqueous solutions or in particular aqueous dispersions of conventional, in particular water-dilutable binders, wherein, in the case of aqueous binder dispersions, the layered silicate is present at least in part in the dispersed phase. Examples of such binders are polyurethane(urea) resins, polyester resins, (meth)acrylic copolymer resins and any hybrid binders derived therefrom. The hybrid binders comprise combinations of at least two binders in particular selected from among polyurethane(urea) resins, polyester resins and (meth)acrylic copolymer resins, wherein the binders, of which there are at least two, are bound together covalently and/or in the form of interpenetrating resin molecules. The only examples mentioned here are (meth)acrylated polyester resins or (meth)acrylated polyurethane resins, in which respectively (meth)acrylic copolymer and polyester resin or (meth)acrylic copolymer and polyurethane resin are bound together covalently and/or in the form of interpenetrating resin molecules.

(Meth)acrylic means methacrylic and/or acrylic.

Polyurethane(urea) means polyurethane which optionally contains urea groups.

The binders may comprise non-functional or reactive resins, for example containing hydroxyl groups corresponding to a hydroxyl value of 20 to 200 mg of KOH/g of solid resin.

Synthetic pathways for the production of the binders stated by way of example are well known to the person skilled in the art and are disclosed, for example, in the comprehensive patent literature relating to water-borne base coats and water-borne base coat binders. These pathways comprise addition reactions and/or condensation reactions and/or free-radical polymerization.

Polyurethane(urea) resins are accordingly conventionally produced by addition reactions from polyisocyanates and synthesis building blocks which comprise groups capable of addition onto isocyanate groups, such as hydroxyl groups, primary amino groups, secondary amino groups. Examples of synthesis building blocks with hydroxyl groups, primary amino groups or secondary amino groups are low molecular weight, oligomeric or polymeric polyols, polyamines, aminoalcohols and water.

Polyester resins are conventionally produced by condensation reactions optionally combined with addition reactions from synthesis building blocks conventional in polyester synthesis. Such synthesis building blocks comprise polycarboxylic acids or polycarboxylic acid derivatives and polyols, as well as, as optional components, monoalcohols, monocarboxylic acids, hydroxycarboxylic acids, epoxy compounds and/or suitable derivatives of these optional components.

(Meth)acrylic copolymer resins are conventionally produced by free-radical copolymerization of (meth)acrylic monomers optionally together with further olefinically unsaturated and free-radically copolymerizable monomers.

The above-stated hybrid binders are accordingly produced by combining the general synthetic pathways stated for the "single species" binder resins.

The phrase "binder precursor" may mean an unfinished binder in the form of a reaction system which has not completely reacted to yield the finished binder and which, once converted into the aqueous phase, reacts to completion in the aqueous phase to yield the finished binder without addition of further binder educts. It may, for example, here comprise a reaction system in which, in the aqueous phase, in particular in an aqueous dispersion, epoxy groups are added onto carboxyl groups or methylol ether groups and hydroxyl or methylol groups undergo condensation with one another.

In particular, however, "binder precursor" is intended to mean a binder intermediate, the synthesis of which is taken to conclusion in the aqueous phase. In general, further binder educts are here separately added to the binder intermediate, in particular after conversion of the binder intermediate into the aqueous phase. In general, the ultimately obtained, finished binder consists of at least 10 wt-% of binder intermediate and correspondingly of no more than 90 wt-% of further added binder educts.

An example includes, but is not limited to, an isocyanate-functional binder intermediate, such as for example a polyurethane prepolymer comprising free isocyanate groups, which may, once converted into the aqueous phase, in particular into an aqueous dispersion, be increased in molecular weight to yield the finished binder by separate addition of chain extenders. Examples of chain extenders reactive towards isocyanate groups are polyols, hydrazine, polyamines such as ethylenediamine, or also water, but only in a quantity sufficient to hydrolyse isocyanate groups and not sufficient to convert the mixture into the aqueous phase.

Alternatively, an isocyanate-functional binder intermediate may, once converted into the aqueous phase, in particular into an aqueous dispersion, also be increased in molecular weight to yield the finished binder without separate addition of chain extenders as further binder educts. This may be achieved by the chain extension, which concludes the synthesis, proceeding after hydrolysis of isocyanate groups with water from the aqueous phase to yield amino groups, which then in turn undergo addition onto free isocyanate groups.

Another example in which there is no separate addition of chain extenders which may be mentioned is alkoxysilane-functional binder intermediates which have been converted into the aqueous phase, in particular into an aqueous dispersion, for example polyurethane prepolymers comprising alkoxysilane groups, the alkoxysilane groups of which, once hydrolysed with water from the aqueous phase, are converted into silanol groups which subsequently condense together to yield siloxane bridges and thus effect chain extension as the conclusion of synthesis.

Another example is aqueous phase "(meth)acrylation", in which (meth)acrylic monomers are added as further binder educts to a binder intermediate which has been converted into the aqueous phase, in particular into an aqueous dispersion, said binder intermediate possibly containing olefinically unsaturated double bonds, and in the presence of said binder intermediate are free-radically (co)polymerized as the conclusion of synthesis to yield a finished hybrid binder consisting of the binder intermediate and the (meth)acrylic (co)polymer.

The layered silicates contained in the aqueous binders containing layered silicate comprise layered silicates known to the person skilled in the art and conventionally used in connection with coatings, for example aluminium-magnesium, sodium-magnesium and sodium-magnesium-lithium silicates with a layered structure. Examples of such layered silicates are layered silicates of the bentonite, smectite, montmorillonite and hectorite type. Naturally occurring layered silicates may be used, but synthetically manufactured layered silicates are preferred. It may be convenient if the layered silicates used are washed grades. Examples of commercially available layered silicates which may be used in aqueous binders are the Optigel® products (from Südchemie Moosburg, Germany), Laponite® RD (from Solvay, Rheinberg, Germany) or Borchigel® layered silicates (from Borchers, Monheim, Germany).

The aqueous binders containing layered silicate are produced by first producing a homogeneous mixture of layered silicate and non-aqueous binder (precursor) in a ratio such as to ensure the layered silicate content according to the definition in the finished aqueous binder, namely to ensure the 0.2 to 7 wt.-% of layered silicate, relative to binder solids content of the finished aqueous binder.

The non-aqueous binder (precursor) may assume the form of a melt or preferably an organic solution, in particular as an organic solution in a water-miscible solvent (mixture). Examples of solvents are esters, for-example butyl acetate; mono- or polyhydric alcohols, for example propanol, butanol, hexanol; glycol ethers or esters, for example diethylene glycol dialkyl ethers, dipropylene glycol dialkyl ethers, in each case with alkyl groups comprising one to six carbon atoms, ethoxypropanol, ethylene glycol monobutyl ether; glycols, for example ethylene glycol, propylene glycol, and the oligomers thereof, N-alkylpyrrolidones, such as for example N-methylpyrrolidone and ketones such as methyl ethyl ketone, acetone, cyclohexanone; aromatic or aliphatic hydrocarbons.

Homogeneous dispersion of the layered silicate in the non-aqueous binder (precursor) may be achieved by adding the layered silicate before, during and/or after synthesis of the non-aqueous binder (precursor) and performing homogeneous mixing, the layered silicate being in any event added before the conversion into an aqueous binder (precursor). The layered silicate may here be added as is or as a preparation of layered silicate and organic solvent and optionally one or more additives, wherein the only additives which are considered are those which are not undesirable or are even desirable in a corresponding aqueous coating composition to be produced using the aqueous binder containing layered silicate. The stated layered silicate preparations contain, for example, 1 to 20 wt-% of layered silicate and assume the form, for example, of a paste or slurry of layered silicate. The layered silicate may already be present in situ during synthesis of the binder (precursor), i.e. it may be added together with binder (precursor) educts or not be added until binder (precursor) synthesis is under way. Preferably, however, it is added to the finished, still non-aqueous binder (precursor).

The homogeneous mixture of layered silicate and non-aqueous binder (precursor) is converted into the aqueous phase, specifically into an aqueous solution or into an aqueous dispersion, by mixing with water, wherein the water may be added to the homogeneous mixture or the homogeneous mixture to the water. It is essential to the invention for the layered silicate to be homogeneously dispersed in the non-aqueous binder (precursor), i.e. before the binder (precursor) is converted into the aqueous phase.

In the event that the non-aqueous binder (precursors) are binder (precursors) which are not dilutable with water, they may be converted into aqueous binder (precursors) by the addition of external emulsifiers. However, water-dilutable binder (precursors) are preferred, the water-dilutability of which is the result of an appropriate content of hydrophilic side and/or end groups. Examples of such hydrophilic groups are nonionic hydrophilic polyether groups, for example polyethylene oxide groups and/or in particular ionic groups or groups convertible into ionic groups. Examples of groups convertible into cationic groups are, for example, amino groups contained in the binder (precursor) and, for example, corresponding to an amine value of 20 to 80 mg of KOH/g, which groups may be converted into cationic groups by neutralization or quaternization. Examples of groups convertible into anionic groups are, for example, carboxyl groups contained in the binder (precursor) and, for example, corresponding to an acid value of 10 to 70 mg of KOH/g, which groups may be converted into anionic groups by neutralization with ammonia, amines and/or aminoalcohols.

The solids content of the aqueous binders containing layered silicate and suitable for the production of aqueous coating compositions is, for example, 25 to 50 wt-%. The aqueous binders containing layered silicate may, for example, contain up to 30 wt-% of organic solvents, in particular water-miscible solvents, relative to solids content. Examples of solvents are those stated above as solvents for the non-aqueous binder (precursor).

The aqueous binders containing layered silicate may be used for the production of aqueous coating compositions, wherein they serve as the vehicle for introducing layered silicate into the aqueous coating composition. In this manner, it is possible to overcome the above-described disadvantages of the prior art and to avoid the hitherto unavoidable introduction of auxiliary substances from layered silicate preparations. Instead, according to the concept upon which the invention is based, the layered silicate is incorporated into the aqueous coating composition via the indispensable main component of the aqueous coating composition, namely the aqueous binder or at least one of two or more aqueous binders. In the event that the aqueous coating compositions contain more than one aqueous binder, it is preferred if the binder obtained from the aqueous binder containing layered silicate is the main binder component within the binder composition of the aqueous coating composition, for example constituting 50 wt-% or more of the binder composition in the aqueous coating composition.

The aqueous coating compositions contain 0.1 to 5, preferably 0.5 to 3 wt-% of layered silicate, relative to the resin solids content of the coating composition, wherein the layered silicate is introduced into the aqueous coating composition via the aqueous binders containing layered silicate according to the invention.

The aqueous coating compositions are produced by mixing the aqueous binders containing layered silicate with pigments and/or further binders and/or cross-linking agents and/or extenders and or conventional coating additives and/or solvents and optionally additionally with further water. If the aqueous coating compositions are pigmented, for example color- and/or special effect-imparting coating compositions, such as in particular water-borne base coats, the aqueous binders containing layered silicate are mixed with pigments and optionally further binders and/or cross-linking agents and/or extenders and/or conventional coating additives and/or solvents, optionally additionally together with further water. Additional mixing with further water may in particular be performed to establish a desired solids content of the aqueous coating composition.

The aqueous coating compositions are composed of the solids content thereof and volatile constituents. The solids content is formed from the resin solids content, the layered silicate from the aqueous binder containing the layered silicate, optionally together with pigments, extenders and/or non-volatile additives. The resin solids content consists of the binder, which originates from the aqueous binder containing layered silicate, optionally together with further binders, which also include paste resins, and/or cross-linking agents. Paste resins are used for grinding pigments and may thus make their way into the aqueous coating compositions via pigment pastes.

Apart from the binder from the aqueous binder containing layered silicate, the resin solids content of the aqueous coating compositions may contain one or more further binders, wherein the further binder(s) are incorporated into the aqueous coating compositions as binders containing no layered silicates. Examples of further generally water-dilutable binders are, in principle, the same as the examples of binders listed above as examples of aqueous binders containing layered silicate.

The aqueous coating compositions may be self drying (physically drying), self cross-linking or externally cross-linking. The resin solids content of the aqueous coating compositions may accordingly contain one or more cross-linking agents. Cross-linking agents which may, for example, be present are amine/formaldehyde condensation resins, for example melamine resins, as well as free or blocked polyisocyanates. If cross-linking agents are present, the mixing ratio of cross-linking agents to binders is preferably 10:90 to 40:60, particularly preferably 20:80 to 30:70, in each case relative to the weight of solids.

The resin solids composition of the aqueous coating compositions is thus, for example:
30 to 100, preferably 50 to 100 wt-%, of binder from the aqueous binder containing layered silicate,
0 to 70, preferably 0 to 50 wt-%, of further binder, including optionally present paste resins, and
0 to 40 wt-% of cross-linking agents.

The aqueous coating compositions may comprise single-component aqueous coating compositions or aqueous coating compositions producible by mixing two or more separately stored components.

If the aqueous coating compositions comprise coating compositions usable for the production of color- and/or special effect-imparting base coat/clear coat two-layer coatings, in particular water-borne base coats, said aqueous coating compositions contain one or more inorganic and/or organic color- and/or special effect-imparting pigments and optionally one or more extenders.

Examples of color-imparting pigments and extenders are titanium dioxide, micronized titanium dioxide, iron oxide pigments, carbon black, silicon dioxide, barium sulfate, micronized mica, talcum, kaolin, chalk, azo pigments, phthalocyanine pigments, quinacridone pigments, pyrrolopyrrole pigments, perylene pigments. Examples of metal effect pigments are the conventional metal pigments known to the person skilled in the art, for example made from aluminium, copper or other metals. Examples of special effect-imparting pigments other than metal pigments are interference pigments, such as for example metal oxide coated metal pigments, for example titanium dioxide coated aluminium, coated mica, such as for example titanium dioxide coated mica.

Special-effect pigments are generally initially introduced in the form of a conventional commercial aqueous or non-aqueous paste, are optionally combined with preferably water-dilutable, organic solvents and additives and are then mixed with an aqueous binder, for example the aqueous binder containing layered silicate. Pulverulent special-effect pigments may first be processed with preferably water-dilutable organic solvents and additives to yield a paste. Colored pigments and/or extenders may, for example, be ground in a proportion of an aqueous binder or in particular in a water-dilutable paste resin. The finished colored pigment paste is then made up with the remainder of the aqueous binder or of the aqueous paste resin.

The aqueous coating compositions may furthermore contain conventional coating additives in quantities conventional in coatings, for example of between 0.1 and 5 wt-%, relative to the solids content thereof, for example rheological agents, such as highly disperse silica, cross-linked or uncross-linked polymer microparticles, polymeric urea compounds, water-soluble cellulose ethers or synthetic polymers having ionic and/or associatively acting groups; antisettling agents; levelling agents; light stabilisers; catalysts; antifoaming agents; wetting agents; adhesion promoters; neutralizing agents.

The proportion of organic solvents in the aqueous coating compositions may be, for example, up to 30 wt-%. These are conventional coating solvents, which may originate from production of the binders and/or are added separately. Examples of solvents are those stated above as solvents for the non-aqueous binder (precursor).

The aqueous coating compositions preferably comprise color- and/or special-effect imparting water-borne base coats, as are used for multilayer coatings and are overcoated with transparent clear coats. Such a water-borne base coat has, for example, a solids content of 10 to 45 wt-%; for special-effect water-borne base coats said solids content is for example preferably 15 to 30 wt-%, while for single-tone water-borne base coats it is preferably higher, for example 20 to 45 wt-%. The ratio of color-imparting pigments plus special effect pigments plus extenders to the resin solids content in the water-borne base coat is, for example, from 0.03:1 to 3:1, for special-effect water-borne base coats it is for example preferably 0.06:1 to 0.6:1, for single-tone water-borne base coats it is preferably higher, for example 0.06:1 to 2.5:1, in each case relative to the weight of solids.

The water-borne base coats may be used for the production of color-and/or special effect-imparting base coat layers of water-borne base coat/clear coat two layer coatings, in particular in automotive and automotive component coating, wherein original and repair coating are included.

The water-borne base coats may be applied onto various kinds of substrates using conventional methods. The substrates are generally of metal or of plastics. These are often precoated, i.e. plastics substrates may, for example, be provided with a plastics primer, metallic substrates generally have a primer, for example applied electrophoretically, and optionally additionally one or more further coating layers, such as for example a surfacer layer. The coatings are preferably applied by spraying to a dry film thickness of 8 to 40 µm. Application preferably proceeds by the wet-on-wet process, i.e. after a flash-off phase, for example at 20 to 80°C, the water-borne base coat layers are overcoated with a clear coat to a dry film thickness of preferably 30 to 60 µm and dried or cross-linked together with the latter at temperatures of for example 20 to 150°C. Temperatures of 20 to 80°C are, for example, preferred for repair purposes. Temperatures in excess of 100°C are preferred for original coating purposes.

Any desired clear coat coating composition may be used to produce the clear coat layers. Suitable clear coats are in principle any known clear coats which may be cured thermally and/or by the action of high energy radiation, for example UV radiation. Usable clear coats here are solvent-borne one-component (1 pack) or two-component (2 pack) clear coats, water-dilutable 1 pack or 2 pack clear coats, powder clear coats or aqueous powder clear coat dispersions.

The following Examples illustrate the production of aqueous binders containing layered silicate, which may be used as aqueous binder components in the production of aqueous coating compositions, in particular aqueous base coats. They may serve as a vehicle for introducing layered silicate into aqueous coating compositions.

### EXAMPLES

### Example 1 (Production of an aqueous polyurethaneurea dispersion containing layered silicate):

1005 g of a linear polyester (synthesized from adipic acid, isophthalic acid and hexanediol, with an OH value of 102) were heated to 90°C and 1.8 g of trimethylolpropane and 393 g of isophorone diisocyanate were added at this temperature. This temperature was maintained until the NCO value was 3.8. After cooling to 60°C, a solution prepared from 35.3 g of dimethylolpropionic acid, 26.1 g of triethylamine and 250 g of N-methylpyrrolidone was added. After heating to 80°C, the temperature was maintained until an NCO value of 1.5 was obtained. The stoichiometric quantity of water necessary to hydrolyze the NCO groups was mixed in and the solution was maintained at 80°C until no NCO was any longer detectable. 3 wt-% of Optigel 0482 (layered silicate from Südchemie), relative to the solids content of the polyurethaneurea solution, were then added and homogeneously mixed in. The mixture was then converted into a 32 wt-% aqueous polyurethaneurea dispersion containing layered silicate by addition of water.

### Example 2 (Production of an aqueous polyurethaneurea dispersion containing layered silicate):

1105 g of a linear polyester (synthesized from adipic acid, isophthalic acid and hexanediol, with an OH value of 102) were heated to 90°C and 1.8 g of trimethylolpropane and 393 g of isophorone diisocyanate were added at this temperature. This temperature was maintained until the NCO value was 3.8. After cooling to 60°C, a solution prepared from 25.3 g of dimethylolpropionic acid, 18.1 g of triethylamine and 250 g of N-methylpyrrolidone was added. After heating to 90°C, the temperature was maintained until an NCO value of 0.5 was obtained. 3 wt-% of Optigel 0482, relative to the solids content of the polyurethaneurea solution, were then added and homogeneously mixed in. This mixture was stirred into 850 g of water and a mixture of 2.4 g of ethylenediamine and 100 g of water was then added within 20 minutes. The mixture was then diluted by addition of water to yield a 33 wt-% aqueous polyurethaneurea dispersion containing layered silicate.

### Example 3 (Production of an aqueous polyurethane dispersion containing layered silicate and chain-extended by means of siloxane bridges):

339 g of a polyester prepared from adipic acid, hexanediol and isophthalic acid (OH value 104) and 19 g of dimethylolpropionic acid were dissolved in 160 g of N-methylpyrrolidone and heated to 40°C. 125 g of isophorone diisocyanate were then added in such a manner that the reaction temperature did not exceed 80°C. The temperature was maintained until an NCO value of 2 (relative to solid resin) was obtained. 14.6 g of 3-aminopropyltriethoxysilane and 16.2 g of diethanolamine were then added in succession.
The reaction mixture was maintained at 80°C until no free NCO groups were any longer detectable. Neutralization and chain extension with siloxane bridge formation were performed by adding and thoroughly incorporating a mixture of 12.6 g of triethylamine and 12.6 g of water. 3 wt-% of Optigel 0482, relative to the solids content of the polyurethane resin solution, were then added and homogeneously mixed in. The mixture was then converted into a 40 wt-% aqueous polyurethane dispersion containing layered silicate by addition of water.

### Example 4 (Production of an aqueous methacrylic copolymer dispersion containing layered silicate):

253 g of Solvesso 100 and 88 g of ethylene glycol monobutyl ether were initially introduced and heated to 155°C. A mixture prepared from 125 g of styrene, 125 g of methyl methacrylate, 720 g of butyl acrylate, 275 g of butyl methacrylate and 765 g of hydroxypropyl methacrylate was then apportioned in 3 hours and, immediately thereafter, a mixture of 75 g of butyl acrylate, 185 g of hydroxypropyl methacrylate, 25 g of methyl methacrylate, 13 g of butyl methacrylate and 56 g of acrylic acid in 1 ½ hours. In parallel, starting with the addition of the first monomer mixture, 98 g of di-tert.-butyl peroxide in 100 g of Solvesso 100 were apportioned in 5 hours. After a further 2 hours' stirring at 145°C, the temperature was reduced to 100°C. 3 wt-% of Optigel 0482, relative to the solids content of the methacrylic copolymer solution, were then added and homogeneously mixed with the resin solution. After the addition of 71 g of dimethylethanolamine, the mixture was converted into a 40 wt-% aqueous methacrylic copolymer dispersion containing layered silicate by addition of water.

### Example 5 (Production of an aqueous polyester dispersion containing layered silicate):

a) A mixture of 598 g of dimethylolcyclohexane, 3098 g of dimer fatty acid (Pripol 1009 from UNICHEMA) and 371 g of dimethylolpropionic acid was heated and esterified at a maximum of 220°C. At an acid value of 30 mg of KOH/g, the mixture was cooled and diluted with 1651 g of ethylene glycol monobutyl ether. A polyester solution was obtained (hydroxyl value of the polyester 30 mg of KOH/g) with a solids content of 70 wt-%. 2 wt-% of Optigel 0482, relative to the solids content of the polyester solution, were then added and homogeneously mixed in.
b) 404 g of the polyester solution containing layered silicate from stage a) were combined with a mixture of 400 g of deionised water and 10 g of dimethylethanolamine and thoroughly mixed. A solids content of the aqueous polyester solution containing layered silicate of 32 wt-% was then established by addition of deionised water.

## Claims

1. An aqueous binder containing 0.2 to 7 wt-% of at least one layered silicate, relative to binder solids content, wherein the aqueous binder is obtainable by converting a homogeneous mixture of layered silicate and non-aqueous binder (precursor) into the aqueous phase by mixing with water and, in the case of a binder precursor, concluding synthesis of the binder in the aqueous phase.

2. The aqueous binder of claim 1, wherein the aqueous binder contains 0.5 to 5 wt-% of the layered silicate, relative to binder solids content.

3. The aqueous binder of claim 1 or 2, wherein the aqueous binder is an aqueous solution or an aqueous dispersion.

4. The aqueous binder of claim 1, 2 or 3, wherein the binder is selected from the group consisting of polyurethane(urea) resins, polyester resins, (meth)acrylic copolymer resins and any hybrid binders derived from these resins.

5. The aqueous binder of any one of the preceding claims, wherein the aqueous binder has a solids content of 25 to 50 wt-% and an organic solvents content of up to 30 wt-%.

6. The aqueous binder of any one of the preceding claims, wherein the at least one layered silicate is selected from the group consisting of aluminium-magnesium, sodium-magnesium and sodium-magnesium-lithium silicates.

7. A process for the production of the aqueous binder of any one of the preceding claims, comprising the steps of:
(a) producing a homogeneous mixture of layered silicate and non-aqueous binder (precursor); and
(b) converting this mixture into an aqueous phase by mixing with water, where in the case of a binder precursor, binder synthesis is taken to conclusion in the aqueous phase.

8. A process for producing an aqueous coating composition comprising the step of:
(a) mixing the aqueous binder of any one of claims 1 to 6 with at least one constituent selected from the group consisting of pigments, further binders, cross-linking agents, extenders, conventional coating additives and solvents, and wherein the mixture may additionally be mixed with further water,
to yield the aqueous coating composition.

9. Use of an aqueous binder of any one of claims 1 to 6 for the production of aqueous coating compositions.
